(19) **Europäisches Patentamt European Patent Office Office européen des brevets**

(11) **EP 4 134 911 B1**

(12) **EUROPEAN PATENT SPECIFICATION**

(45) Date of publication and mention of the grant of the patent:
**21.01.2026 Bulletin 2026/04**

(21) Application number: **21191319.9**

(22) Date of filing: **13.08.2021**

(51) International Patent Classification (IPC):
**G06T 7/11** $^{(2017.01)}$    **G06T 7/73** $^{(2017.01)}$

(52) Cooperative Patent Classification (CPC):
**G06T 7/11; G06T 7/75;** G06T 2207/10016;
G06T 2207/20084; G06T 2207/30196

(54) **A DIRECT METHOD FOR ESTIMATING A POSE OF A BODY IN AT LEAST ONE IMAGE**

DIREKTES VERFAHREN ZUR SCHÄTZUNG DER POSE EINES KÖRPERS AUF MINDESTENS EINEM BILD

PROCÉDÉ DIRECT POUR ESTIMER UNE POSE D'UN CORPS DANS AU MOINS UNE IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.02.2023 Bulletin 2023/07**

(73) Proprietors:
• **TOYOTA JIDOSHA KABUSHIKI KAISHA Toyota-shi, Aichi-ken 471-8571 (JP)**
• **Katholieke Universiteit Leuven 3000 Leuven (BE)**

(72) Inventors:
• **ABBELOOS, Wim 1140 BRUSSELS (BE)**
• **MA, Liqian 3000 LEUVEN (BE)**
• **VAN GOOL, Luc 3000 LEUVEN (BE)**
• **PROESMANS, Marc 3000 LEUVEN (BE)**

(74) Representative: **Cabinet Beau de Loménie 103, rue de Grenelle 75340 Paris Cedex 07 (FR)**

(56) References cited:
**CN-A- 110 008 915    US-B1- 11 074 711**

**Description**

TECHNICAL FIELD

The present disclosure relates to the field of image processing, in particular to the field of instance segmentation in images. More in particular, the present disclosure relates to a method for estimating a pose of a body in at least one image. The method may find applications in all kind of industries, including the automotive industry. For instance, the method may be used to understand a vehicle's environment in order to adequately control it, or to monitor and support human activities in places such as a factory.

TECHNOLOGICAL BACKGROUND

Processing images may be used to detect various objects visible on the image. Such processing is therefore particularly useful for self-driving vehicles (partially or fully self-driving) and for other types of automated systems, because these systems have to be able to understand their surroundings on the basis of images acquired by cameras.

Instance segmentation methods have been proposed to precisely delineate objects which are visible in an image (in other words, different objects or bodies are called different instances).

The definition of semantic instance segmentation is to locate all objects in an image, assign each object to a specific class and generate a pixel-perfect mask for each one, perfectly delineating its shape. This is in contrast with the standard bounding-box detection methods, where each object is represented by a crude rectangular box and where such bounding boxes may overlap. Since having a binary mask for each object is desired (and necessary) in many applications, including pose estimation, instance segmentation remains an important research topic.

It has been proposed to use artificial neural networks (ANNs) such as deep neural networks to perform instance segmentation. A deep neural network is a machine learning model having parameters which may be adjusted during a training phase, e.g. by stochastic gradient descent, to minimize the value of an objective function ("loss function"). The training phase comprises feeding the network with labeled input-output pairs: known images with an instance segmentation which has been prepared by an operator. The specific structure and implementation of the network may be called a "network architecture".

Currently, the dominant method for instance segmentation is based on a detect-and-segment approach, where objects are detected using a bounding-box detection method and then a binary mask is generated for each one, cf. e.g.:

K. He, G. Gkioxari, P. Dollar, and R. Girshick. Mask R-CNN. In Computer Vision (ICCV), 2017 IEEE International Conference on Computer Vision, pages 2980-2988. IEEE, 2017, and
S. Liu, L. Qi, H. Qin, J. Shi, and J. Jia. Path aggregation network for instance segmentation. In Proceedings of the IEEE Conference on Computer Vision and Pattern Recognition, pages 8759-8768, 2018.

Despite many attempts in the past, the Mask R-CNN framework was the first one to achieve outstanding results on many benchmarks, and to this date is still the most used method for instance segmentation. Their method consists of detecting objects first and generating a binary mask for each object in a next step. While this provides good results, it generates low resolution masks which are not always desirable (e.g. for photo-editing applications) and operates at a low frame rate, making it impractical for real-time applications such as autonomous driving.

In other words, Mask R-CNN and other follow-up works such as patent application CN 110008915 A adopt a top-down detect-then-segment principle. In particular, these top-down methods first employ an object detector to predict a bounding-box for each person, and then crop and resize regions-of-interest (ROIs) feature maps into a fixed size for each person. Such a top-down pipeline has several limitations. (1) The bounding box causes early commitment, i.e., if the bounding box fails to detect the whole body, there is no path to recovery. Further on, several people may exist in the same bounding box which may not well align with a human due to overlap ambiguity. (2) The detected person patches are cropped and resized thus the person resolution is usually heavily compressed, as mentioned above. (3) Top-down methods cannot fully leverage the sharing computation mechanism of convolutional networks, and thus, their inference time scales unfavorably with the number of instances.
Besides, bottom-up methods are also known in the art, such as US 11,074,711 B1.

Thus, there is room for improvement as regards pose estimation methods and dense pose estimation methods, especially for images containing many instances and thus comprising multi-person occlusions, as can be encountered in applications such as autonomous driving.

SUMMARY

In this respect, the present disclosure relates to a computer-implemented method for estimating a pose of a body in at least one image, comprising a mask prediction of predicting a mask for every detected instance of the body in the at least one image, and a representation prediction of predicting a representation comprising a map between pixels of body regions in the whole at least one image and points of a body model, wherein the method further comprises, for every detected instance, applying the mask to the representation to derive the pose of the body.

For the sake of conciseness, this method is referred to hereinafter as the pose estimation method.

The image may be a digital image. The image may comprise a plurality of pixels adjacent to one another in at least one dimension, generally two or three dimensions, each pixel having at least one value (e.g. three values in the case of an RGB scale. Other scales are possible). The image may be acquired by a sensor, e.g. by a camera, e.g. in the visible or thermal range, and/or stored in a memory.

The mask may be a filter configured to mask some parts of the image (e.g. some pixels) while leaving others visible. Specifically, the mask for an instance of the body may be configured to leave the instance visible and mask everything else, including the background and other instances. The background may be defined as everything which is not an instance.

The body may be a deformable body, including an articulated body, such as a human body, an animal body, a plant body, a robot body, etc., or any object body. The body is configured to be modelled by a body model, i.e. a numerical representation of the body. The body model may be defined by a plurality of points, corresponding e.g. to landmarks of the body and/or to nodes of a mesh representing the body. In the following, without any loss of generality, it will be assumed that the body is a human body, but the following description may be adapted mutatis mutandis to other kinds of bodies.

The map establishes a correspondence between each pixel of a body region in the image and a corresponding point of the body model.

The proposed pose estimation method is a direct and end-to-end method based on a divide-and-conquer approach, namely dividing the pose estimation in two subtasks: the mask prediction and the representation prediction. This enables, as opposed to previous methods which first detect the bodies and then estimate the pose for each detected body, to process the whole image at once, which has the following advantages: first, predicting a representation in the whole image, instead of within a single bounding box, avoids the early commitment and the heavy resolution compression of the previous approaches. To support this, the mask is applied to the predicted representation and not at the beginning to crop the instance. Second, parallelization is possible and therefore computation time is less dependent on the number of instances to detect in the image. Inference is therefore shortened.

The estimated pose is therefore more accurate and requires fewer resources (e.g. time and memory) to produce, which makes the method more suitable for real-time applications such as autonomous or assisted driving.

Optionally, the mask comprises a dense pose mask configured to mask pixels of the at least one image which do not belong to the body of the instance. An instance may comprise not only a body but also accessories thereof, namely things which do not belong to be body *per se* but are associated therewith, such as clothes, hair, objects held by the person, etc. The body of the instance therefore consists only of body parts, such as the torso, head, arms and legs, etc. Since the body is the same for a given species (e.g. humans), the body can be modeled generically, e.g. without the variations originating to different clothes, hair-cuts, etc., and the dense pose mask can adapt well to the body.

As will be detailed below, the pose estimation method may use at least one machine learning model, e.g. a neural network model. A neural network model may comprise an artificial neural network. An artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or simply weights) and bias. The weights can be modulated according to the learning of the ANN. In principle, learning comprises providing the ANN with a set of situations in which inputs (here, the image) and outputs (here, the estimated poses) are known. During the learning process, the ANN adapts its synaptic weights and biases to conform to the learned situations, possibly with some tolerance. The weights and biases, once determined at the end of the learning phase, may then remain constant or not during the exploitation or deployment phase.

Optionally, the pose estimation method further comprises extracting features from the at least one image, wherein the mask prediction and the representation prediction take the extracted features as an input. Extracting features is known *per se* in the art of image processing by machine learning and enables to provide the mask prediction and the representation prediction with an appropriate format of data extracted from the input image. Examples of a feature extractor include a ResNet network (e.g. ResNet-50 as presented in Kaiming He, Xiangyu Zhang, Shaoqing Ren, and Jian Sun. Deep residual learning for image recognition. In CVPR, 2016.).

Optionally, the extracted features are extracted as a pyramid at a plurality of scales and aggregated. The features may be extracted as a pyramid by a feature pyramid network (FPN), which is known *per se* in the art. This enables to take into account different sizes of instances with the same resolution, to alleviate instance scale variation within the image, and therefore to increase accuracy.

Optionally, the representation prediction comprises transforming dense features into a sparse format, processing the sparse format features and transforming the processed features back to a dense format. Performing the processing on sparse format features enables to save computation and memory cost. The processing, or more generally the representation prediction, may involve a convolution, e.g. carried out by a convolutional neural network (CNN).

Optionally, the map comprises an allocation of the pixels to respective body regions and coordinates of the pixels in the respective body regions. The coordinates, although mentioned herein in plural, may be expressed in at least one dimension and therefore may encompass a single value or a plurality of values. The coordinates indicate which point of the parameterization of the body region the pixel corresponds to.

Such a map structure enables to easily establish the correspondence between the image pixels and the body model, and increases accuracy of the pose estimation e.g. when body parts of different people overlap. Moreover, the estimated pose may be a dense pose, i.e. a pose in which each pixel of the body in the image is mapped to a location on the body model, as opposed to a sparse pose such as body keypoints or skeletons.

An example of a representation or map is the IUV representation introduced by Riza Alp Güler, Natalia Neverova, and Iasonas Kokkinos. DensePose: Dense human pose estimation in the wild. In CVPR, 2018. In this IUV representation, I stands for an index, i.e. an allocation of the pixels to the body regions, and U and V are local two-dimensional coordinates for each body part. The IUV representation is an image-based UV map with multiple channels (one channel per body part).

Optionally, the pose of the body is derived as a shape and location of the body model in the at least one image. That is, the output of the pose estimation method comprises a shape of the body, especially relevant when the body is deformable, and a location of the body. The pose may further comprise the location of the points of the body model in the image.

Optionally, the at least one image is a two-dimensional image and the body model is a three-dimensional model. The image may be a black-and-white or color image. The body model may comprise a surface in three-dimensions, the surface corresponding to an outline of the body. In some embodiments, such a surface may be seen as the skin of the body. The points may be nodes of a mesh discretizing the three-dimensional surface.

The mask prediction further outputs mask information which is given as an input to the representation prediction. Therefore, the representation prediction may be made on relevant parts of the image as indicated by the mask information. This further reduces the memory need for carrying out the pose estimation method.

The mask information may include part or all of the information contained in the mask itself. For instance, the mask information may be the same as the mask or different from the mask.

Optionally, the mask information comprises an instance mask configured to mask pixels of the at least one image outside of an outline of the instance, including accessories of the body. That is, said outline closely surrounds the body and the body's accessories. As opposed to the dense pose mask which masks everything but the body, the instance mask is configured not to mask the body's accessories, as defined above (including e.g. hair, clothes, objects, etc.). This enables the representation prediction step to work only on the relevant instance, but without making premature choices as to the exact shape of the body itself. Therefore, accuracy of the representation prediction is improved. The outline may not include portions of the body occluded by other instances.

The mask information may comprise as many instance masks as there are instances detected in the image.

Optionally, the mask and the mask information are predicted jointly for every detected instance. Usually, in available labeled datasets, the instance (to be used as the mask information) is annotated more often than the mask itself. Based on this consideration, the joint prediction leverages the relatively rich annotations for the mask information in order to predict the mask itself. Therefore, the mask can be predicted more accurately.

Optionally, the representation prediction comprises background suppression based on the mask information. Therefore, the processing is not carried out on the background, which is costly and wasteful. The background may correspond to pixels of the image which are masked in all the masks of the mask information.

Optionally, the pose estimation method further comprising instance-aware normalization based on the mask information. The instance-aware normalization performs feature normalization for each instance separately, as opposed to normalizing all the instances together. This enables to take into account the differences between instances (e.g. appearance, colors) and therefore makes the method perform better.

Optionally, the at least one image comprises a plurality of images forming a video, and the method further comprises temporally smoothing the estimated poses between subsequent ones of the images. Directly applying image-based methods to video data may lead to undesirable flickering issues, since the temporal information is generally not considered. In these embodiments, to address this, a temporalsmoothing scheme is introduced. The temporally smoothing fits the predicted representation well.

The present disclosure is further related to a computer program including instructions for executing the steps of the above described pose estimation method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described pose estimation method.

The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

The invention and advantages thereof will be better understood upon reading the detailed description which follows, of embodiments given as non-limiting examples. This description refers to the appended drawings, wherein:

- Fig. 1 is an overall diagram of a pose estimation method according to an embodiment;
- Fig. 2 is a detailed diagram of a sparse residual processing according to an embodiment.

DETAILED DESCRIPTION OF EMBODIMENTS

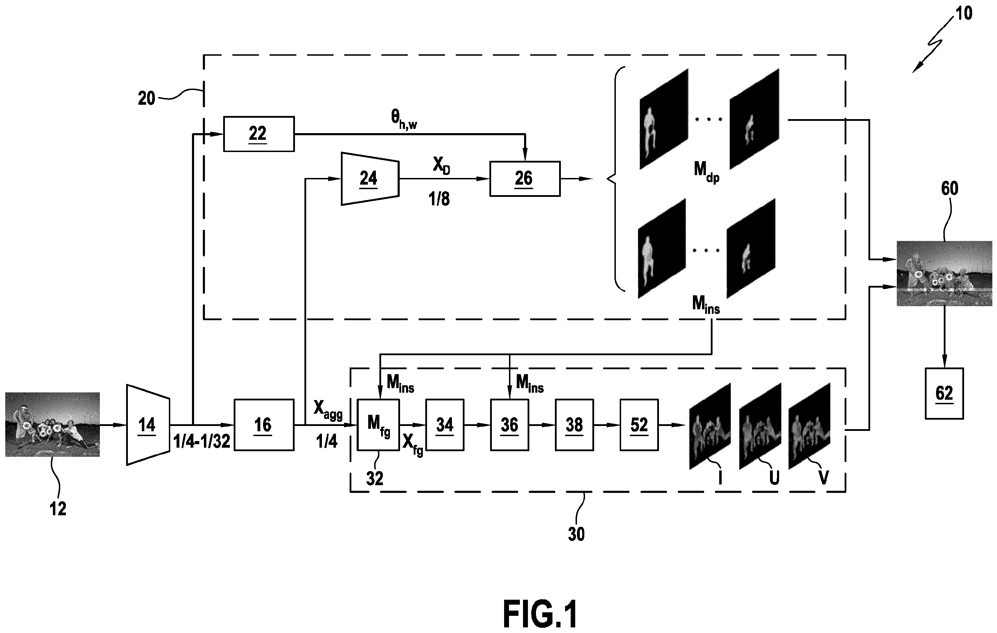

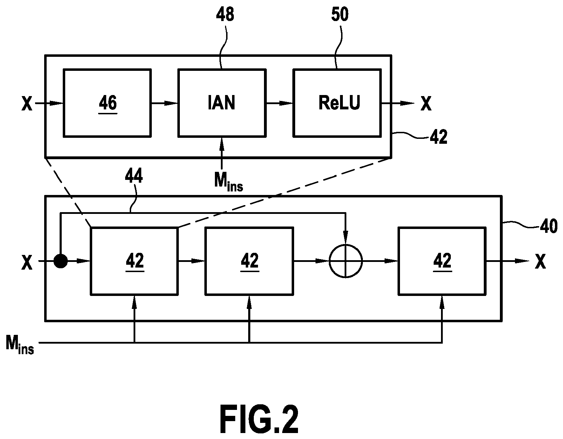

An embodiment of method 10 for estimating a pose of a body in at least one image is described with reference to Figs. 1 and 2. The method is computer-implemented, e.g. the method may be implemented as software running on a computer, the computer comprising a memory which may store data such as a computer program which, when executed, carried out the pose estimation method 10.

As mentioned above, the pose estimation method 10 is based on a divide-and-conquer framework to divide the (possibly multi-person) dense pose estimation problem into two subtasks: a mask prediction 20 and a representation prediction 30. As will be discussed hereinafter in more details, the mask prediction 20 predicts a mask for every detected instance of a body in at least one image 12. In parallel, the representation prediction 30 predicts a representation comprising a map between pixels of body regions in the whole image 12 and points of a body model. Afterwards, for every instance, applying the predicted mask to the predicted representation enables to derive the pose of the body, which is here illustrated as an output image 60 wherein the derived poses are superimposed on the input image. Therefore, as will be more apparent in the following, the pose estimation method 10 can be applied directly to all instances in the image, rather than having to process every instance separately.

The body model may be predetermined, e.g. learnt during training of the pose estimation method 10. Methods for learning the body model include for instance that described in Matthew Loper, Naureen Mahmood, Javier Romero, Gerard Pons-Moll, and Michael J. Black. 2015. SMPL: a skinned multi-person linear model. ACM Trans. Graph. 34, 6, Article 248 (November 2015). DOI:https://doi.org/10.1145/2816795.2818013. The body model may be designed in the annotated training data to correspond e.g. to a human body in this example, but other types of bodies are envisaged. In this example, the body model is a three-dimensional model whose external surface is meshed, thus defining a plurality of points (e.g. nodes and/or centers). However, other body models may be used.

As illustrated in Fig. 1, the pose estimation method 10 comprises extracting features from the at least one image 12, here a two-dimensional, color, image. The extracted features are given as an input to the mask prediction 20 and the representation prediction 30.

Specifically, the pose estimation method 10 may start with a feature extractor backbone 14, for instance a ResNet network (e.g. ResNet-50) followed by a feature pyramid network (FPN, as described e.g. in Tsung-Yi Lin, Piotr Dollár, Ross Girshick, Kaiming He, Bharath Hariharan, and Serge Belongie. Feature pyramid networks for object detection. In CVPR, 2017.) That is, the extracted features are extracted as a pyramid at a plurality of scales. For instance, the scales may be 1/4 to 1/32, but other scales are possible.

Then, the extracted feature pyramid may be aggregated into a global feature representation by a feature aggregation module 16. This global feature representation is then fed into the mask prediction 20 (also referred to as the instance branch hereinafter) and to the representation prediction 30 (also referred to as the global IUV branch hereinafter), respectively.

The instance branch (mask prediction 20) aims to predict the instance-level information, i.e., at least a mask and optionally mask information for each instance. In this embodiment, the mask comprises a dense pose mask $M_{dp}$ configured to show pixels of the at least one image which belong to the body of the instance (i.e. without accessories), or conversely to mask pixels of the at least one image which do not belong to the body of the instance; and the mask information comprises an instance mask $M_{ins}$ configured to mask pixels of the at least one image outside of an outline of the instance, including accessories of the body. In Fig. 1, the dense pose mask $M_{dp}$ and the instance mask $M_{ins}$ are illustrated as white regions and are configured to mask black regions (the remainder of the image). Figure 1 illustrates the difference between the mask and the mask information: as can be seen by comparing the leftmost image of the dense pose mask $M_{dp}$ (mask) to the leftmost image of the instance mask $M_{ins}$ (mask information), the dense pose mask $M_{dp}$ is configured to mask both the Frisbee hold by the person and the shorts the person wears, whereas the instance mask $M_{ins}$ does not mask the person's accessories, including clothes or objects.

In contrast to the mask prediction 20 (instance branch), the representation prediction 30 (global IUV branch) aims to predict a representation for the whole image, here the dense pose IUV representation. Some methods estimate pixelwise correspondence to a 3D surface model by fitting a prior deformable surface model to the image via indirect supervision, e.g. through body silhouette and key-joints. In *DensePose: Dense human pose estimation in the wild* cited above (DensePose), Güler et al. propose to directly map each pixel of a person region in the RGB image to the 3D human surface. The dense correspondence is represented in a chart-based format called IUV, having 24 body surfaces plus one background category (25 classes in total). The 25 classes may be predetermined, as they need to be reflected in the training data. With each surface patch, the local correspondence is further represented by a local UV coordinate system. Therefore, the dense pose IUV representation has $25 \times 3 = 75$ dimensions, which are then summarized into three dimensions according to the 25 classes.

The final per-person dense pose estimation can be obtained simply by applying the mask to the representation, e.g. by multiplying the dense pose mask $M_{dp}$ with the global IUV representation in an elementwise way. Thus, the pose of the body may be derived as a shape and location of the body model, the predicted representation providing information on the shape of the body model while the predicted mask provides information on the location of the body model.

To alleviate instance scale variation issue, a feature aggregation module 16 is provided to aggregate features of different scales. Specifically, each FPN level is upsampled by convolutions and bilinear upsampling until it reaches 1/4 scale. These upscaled features are summed together as $X_{agg}$ which are fed into the instance branch (mask prediction 20) and global IUV branch (representation prediction 30), respectively.

As regards the mask prediction 20, the instance branch builds on top of a direct instance segmentation method (for instance: CondInst from Zhi Tian, Chunhua Shen, and Hao Chen. Conditional convolutions for instance segmentation. In ECCV, 2020.) whose core idea is to dynamically generate the specific mask FCN head parameters for each instance. FCN stands for Fully Convolutional Network - an FCN is a network that does not contain any "Dense" layers as in traditional CNNs, instead it contains 1x1 convolutions that perform the task of fully connected layers (Dense layers).

Thus, for an image with $K$ instances (in this example, $K = 4$ for a group of four persons), $K$ different mask FCN heads 26 will be dynamically generated, and each one contains the characteristics of its target instance in their filters. That is, the weights of the mask FCN heads 26 are not fixed during inference, but generated depending on the input image. Note that only one mask FCN head 26 is illustrated for legibility purposes, but a plurality of them is envisaged. In addition, similar to CondInst, centerness and box heads may be provided as the mask FCN heads 26, but they are omitted in the figure for simplicity. Note that the number of instances $K$ is automatically determined by the mask FCN heads 26.

In particular, as shown in Fig. 1 top, the instance branch first processes the received aggregated features $X_{agg}$ with a Down Sample Conv module 24 to extract global instance features $X_D$ and reduce the feature resolution to 1/8 scale for saving computation. For instance, this Down Sample Conv module 24 contains three convolution layers of stride 1 and one convolution layer with stride 2.

Moreover, $X_D$ is combined with a map of the coordinates, which are relative coordinates from all the locations on $X_D$ to the location (h, w) (i.e., where the filters of the mask head are generated). Then, the combination, termed as $X_{D'}$ is sent to the mask FCN head 26, whose parameters $\theta_{h,w}$ are dynamically generated by a weight generator module 22, to predict the instance mask. In other words, $X_D$ contains the global information for the whole image, while the parameters $\theta_{h,w}$ encode instance-aware characteristics (e.g. relative position, shape, and appearance).

Different from CondInst, the mask FCN head 26 will produce the instance mask $M_{ins}$ and dense pose mask $M_{dp}$ jointly for each instance (in other words, the mask and the mask information are predicted jointly for every detected instance). This joint learning design is to borrow the existing rich instance annotations for stabilizing training, as well as provide instance masks for the global IUV branch.

Although one architecture has been detailed for the mask prediction 20, one can also adopt other advanced direct instance segmentation networks for the instance branch, like SOLO (Xinlong Wang, Tao Kong, Chunhua Shen, Yuning Jiang, and Lei Li. Solo: Segmenting objects by locations. In ECCV, 2020.) and SOLOv2 (Xinlong Wang, Rufeng Zhang, Tao Kong, Lei Li, and Chunhua Shen. Solov2: Dynamic and fast instance segmentation. In NeurIPS, 2020.).

Now, the representation prediction 30 will be detailed with the example of an IUV representation. Since the representation prediction 30 aims to predict a representation of the whole image 12, the representation is referred to as a global representation. Therefore, the representation prediction 30 is also referred to as the global IUV branch. As explained above, the IUV representation is an example of a map comprising an allocation of the pixels to respective body regions (the index I) and coordinates U, V of the pixels in the respective body regions.

The representation prediction 30 aims to predict the dense pose IUV information globally where all IUVs of different people are represented in the same image plane. However, merely performing convolution over the large background region is quite computationally expensive and wasteful. Therefore, the proposed method 10 comprises a background suppression operation followed by a sparse residual FCN module to only deal with the body region(s) of interest. As detailed below, the background suppression operation may be based on the mask information (e.g. the instance mask $M_{ins}$). The method 10 may further comprise an instance-aware normalization (IAN) technique that performs better than normalizing all the instances together.

**Background suppression.** The human dense pose estimation task is only related to the people region, which usually occupies a small part of the whole image. For example, the sparsity (i.e. ratio of the people region over the whole image) on the DensePose-COCO dataset is averagely 23.7% and ranging from 1.7% to 90.9%. The large background regions will waste a large amount of computation and interfere with the learning procedure as well. Previous top-down multi-person dense pose estimation methods alleviate this issue by cropping the feature maps according to the detected bounding boxes, and process them separately in a single person style. Such a cropping-based way is sub-optimal as it still introduces some background or content from other instances. Besides, the cropping-based way suffers from the early commitment issue. In contrast, the pose estimation method 10 comprises a background suppression strategy to suppress the background interference explicitly. During background suppression 32, first, the estimated instance masks $\{M_{ins}^i\}_{i=1,...,N}$ are resized to the resolution of features $X_{agg}$. The resized masks $\{\widetilde{M}_{ins}^i\}_{i=1,...,N}$ are then combined into a foreground mask $M_{fg}$ which is applied to mask the features in a point-wise manner as follows,

$$X_{fg} = M_{fg} \odot X_{agg}, \text{ where } M_{fg} = \bigcup_{i=1}^{N} \widetilde{M}_{ins}^i, \tag{1}$$

where $X_{fg}$ denotes the masked foreground features. The background suppression may be non-parametric, i.e. may not require training of any parameter.

**Sparse residual FCN.** As mentioned above, computing the features on background regions is wasteful, especially considering that the need to maintain high-resolution features to achieve dense global IUV prediction. Therefore, the representation prediction may comprise transforming dense features into a sparse format, processing the sparse format features and transforming the processed features back to a dense format. Thus, convolution (or more generally processing) is performed in a sparse manner to reduce the computation and memory cost.

Specifically, the dense features are first transformed into a sparse format in a dense-to-sparse operation 34, and then processed by a sparse residual FCN module 36 and finally transformed back to a dense format in a sparse-to-dense operation 38. The dense-to-sparse operation 34 and/or the sparse-to-dense operation 38 may be non-parametric and are known per se in the art.

In this embodiment, the sparse residual FCN module 36 comprises three sparse residual blocks 40. As shown in Fig. 2, each sparse residual block 40 contains two sparse sub-blocks 42 with a residual skip connection 44 followed by a third sparse sub-block 42 (except for the last sparse residual block 40). Each sparse sub-block 42 includes a sparse convolution layer 46, an instance-aware normalization (IAN) layer 48, and a ReLU layer 50. The sparse convolution layer 46 may be the submanifold sparse convolution (SSC) layer proposed by Benjamin Graham, Martin Engelcke, and Laurens Van Der Maaten. 3D semantic segmentation with submanifold sparse convolutional networks. In CVPR, 2018. This SSC can fix the location of active sites and thus maintain the same level of sparsity throughout the network.

**Instance-aware normalization.** The instance-aware normalization 48 performs normalization based on the mask information, specifically feature normalization for each instance separately. In particular, the resized instance masks $\{\widetilde{M}_{ins}\}_{i=1,...,N}$ are integrated into the normalization operation as follows,

$$\mu_{nci} = \frac{1}{Numel(\widetilde{M}_{ins}^i)} \sum_{h,w \in \widetilde{M}_{ins}^i} x_{nchw}, \tag{2}$$

$$\sigma_{nci}^2 = \frac{1}{Numel(\widetilde{M}_{ins}^i)} \sum_{h,w \in \widetilde{M}_{ins}^i} (x_{nchw} - \mu_{nci})^2, \tag{3}$$

$$\hat{x} = \bigcup_{i=1}^{N} \bigcup_{h,w \in \widetilde{M}_{ins}^i} (\frac{x_{nchw} - \mu_{nci}}{\sqrt{\sigma_{nci}^2 + \epsilon}} \gamma + \beta), \tag{4}$$

where $x_{nchw}$ denotes the feature point at location (h,w) exists in $\widetilde{M}_{ins}^i$, i.e. the region of the $i$-th instance. $Numel(\cdot)$ means the point number in the region of the $i$-th instance. The IAN calculates the mean $\mu_{nci}$ and variance $\sigma_{nci}^2$ for each instance

mask $\widetilde{\boldsymbol{M}}^{i}_{ins}$ individually, and then apply instance normalization (see e.g. Dmitry Ulyanov, Andrea Vedaldi, and Victor Lempitsky. Instance normalization: The missing ingredient for fast stylization. arXiv preprint arXiv:1607.08022, 2016) due to its better performance over other normalization techniques in pilot experiments. However, other normalizations remain possible. Note that, all instances share the same learnable affine parameters $\gamma$ and $\beta$ as they all belong to the person category.

Then, a convolution 52, known *per se* in the art, enables to derive the global IUV representation. The convolution 52 acts as a refinement to map features to the IUV representation.

Note that the mask information is used, in the representation prediction 30, for the optional background suppression and for the optional sparse-dense-sparse conversion of the features. Should these steps not be carried out, it is not necessary to transfer any mask information from the mask prediction 20 to the representation prediction 30. Predicting the mask information may nevertheless be helpful, especially when predicted jointly with the mask itself, as explained above.

Although a particular architecture of the representation prediction 30 has been described, other architectures may be used, which predict the desired representation e.g. through convolutions. Examples of other architectures include more advanced networks such as Transformerbased networks or multilayer perceptron networks.

In some embodiments, the pose estimation method 10 is applied not only to a single image but to a plurality of images. Specifically, the at least one image may comprise a plurality of images forming a video. In these embodiments, the pose estimation method 10 may further comprise temporally smoothing the estimated poses between subsequent ones of the images. For instance, a simple and effective 2D temporalsmoothing scheme 62, which fits well the global IUV representation, may be introduced. The main idea is to use the temporal constraint from the original video (e.g. in RGB). Specifically, given a present frame $I_t$ and its temporally adjacent frames $\{I_{t+j}\}_{j=-r,\cdots,-1,1,\cdots,r}$, an optical flow estimation model (e.g. RAFT: Zachary Teed and Jia Deng. RAFT: Recurrent all-pairs field transforms for optical flow. In ECCV, 2020.) is implemented to predict the optical flows $\{f_{t\rightarrow t+j}\}_{j=-r,\cdots,-1,1,\cdots,r}$, which are used to warp the global IUV dense pose representation $C$ of adjacent frames to one $\boldsymbol{C}_{temp}$ for the present frame using the following weighted sum:

$$\boldsymbol{C}_{t+j\rightarrow t} = \operatorname*{Warp}_{r}(C_{t+j}, f_{t\rightarrow t+j}), \qquad (6)$$

$$\boldsymbol{C}_{temp} = \sum_{j=-r}^{r} \alpha_j \, \boldsymbol{C}_{t+j\rightarrow t}, \qquad (7)$$

where $r$ is the temporal window interval and $\alpha_j$ is the sum weight. For instance, $r = 2$ and $\{\alpha_j\}$ = [0.2,0.2,0.2,0.2,0.2] by default. Here, the warping and weighted sum operations may be performed on the continuous logit-level, i.e. $C$ is a 75-dimensional logit representation.

The proposed pose estimation method 10 is an end-to-end method which can be trained as such. As mentioned before, the instance mask $\boldsymbol{M}_{ins}$ and dense pose mask $\boldsymbol{M}_{dp}$ may predicted jointly in the instance branch (mask prediction 20) because of the limited dense pose annotation and the limited body coverage. Regarding the annotation, only part of human instances was selected for dense pose annotation on the DensePose-COCO dataset. Training with annotated dense pose masks only will lead to inferior instance prediction performance. Furthermore, the dense pose masks do not cover the whole person (e.g. the clothes and other accessories are missing), leading to important information missing in the background suppression 34. Therefore, both instance masks and dense pose masks are jointly regressed in the instance branch to improve the learning with rich instance annotations and suppress the background with instance masks. Besides, during training, the ground truth instance masks are applied for background suppression in the global IUV branch during training, considering that the estimated instance masks contain many errors in the early training stage. Such errors will break the learning of the global IUV branch.

Formally, the overall loss function of the pose estimation method may be formulated as:

$$L_{all} = L_{mask} + L_{IUV}, \qquad (8)$$

$$L_{mask} = L_{fcos} + \lambda_1(L_{M_{ins}} + L_{M_{dp}}) \qquad (9)$$

$$L_{IUV} = L_I + \lambda_2 L_{UV} + \lambda_3 L_s \qquad (10)$$

where $L_{mask}$ and $L_{IUV}$ denote the loss for instance branch (mask prediction 20) and global IUV branch (representation

prediction 30), respectively. $\lambda_1 = 5$, $\lambda_2 = 10$, $\lambda_3 = 1$ are used to balance the losses. Similar to CondInst, the instance prediction loss $L_{mask}$ includes $L_{fcos}$ and two mask losses $L_{M_{ins}}$, $L_{M_{dp}}$. The details of $L_{fcos}$ may be found in FCOS (Zhi Tian, Chunhua Shen, Hao Chen, and Tong He. FCOS: Fully convolutional one-stage object detection. In ICCV, 2019.). $L_{M_{ins}}$ and $L_{M_{dp}}$ are defined as,

$$L_{M_{ins}} = \frac{1}{N_{pos}} \sum_{h,w} \mathbb{1}_{\{c^*_{h,w}>0\}} L_{dice}(\boldsymbol{M}^{h,w}_{ins}, \boldsymbol{M}^{h,w*}_{ins}), \quad (11)$$

$$L_{M_{dp}} = \frac{1}{N_{pos}} \sum_{h,w} \mathbb{1}_{\{c^*_{h,w}>0\}} L_{dice}(\boldsymbol{M}^{h,w}_{dp}, \boldsymbol{M}^{h,w*}_{dp}), \quad (12)$$

where $[\boldsymbol{M}^{h,w}_{ins}, \boldsymbol{M}^{h,w}_{dp}] = \mathrm{MaskHead}(\boldsymbol{X}_D; \theta_{h,w})$ are the estimated instance and dense pose masks, and $\boldsymbol{M}^{h,w*}_{ins}, \boldsymbol{M}^{h,w*}_{dp}$ are the corresponding ground-truth. The $c^*_{h,w}$ is the classification label of location (h, w), which is the class of the instance associated with the location or background (e.g. 0) if the location is not associated with any instance. $N_{pos}$ is the number of locations where $c^*_{h,w} > 0$. The global dense pose IUV prediction loss $L_{IUV}$ contains one cross-entropy loss $L_I$ for body parts classification, one smooth L1-loss $L_{UV}$ for local UV coordinates regression, and one smoothing loss $L_S$. The smoothing loss $L_S$ is applied to encourage the model to produce less noisy IUV representation, since the dense pose annotation is a set of sparse points. In particular, an edge-aware smoothness regularization is adopted as follows:

$$L_s = \frac{1}{N} \sum_{i=1}^{N} |\nabla_h \boldsymbol{C}| e^{-|\nabla_h M^i_{ins}|} + |\nabla_w \boldsymbol{C}| e^{-|\nabla_w M^i_{ins}|} \quad (13)$$

where C is the predicted global dense pose IUV representation.

Experiments have been run with the following implementation details, unless mentioned otherwise. The feature extractor backbone 14 includes a ResNet-50 architecture as the backbone, followed by a 4-level FPN (e.g. 1/4, 1/8, 1/16, 1/32 levels). The ResNet weights are initialized by the pre-trained keypoints estimation models from COCO. The models are trained with stochastic gradient descent (SGD) for 130K iterations with an initial learning rate of 0.01 and a mini-batch of 8 images. The learning rate is reduced by a factor of 10 at iteration 100K and 120K, respectively. Weight decay and momentum are set as 0.0001 and 0.9, respectively. Following the DensePose paper, two quantitative metrics are used for evaluation, here Average Precision (AP) and Average Recall (AR). Both metrics are calculated at a number of geodesic point similarity (GPS) ranging from 0.5 to 0.95. In addition, other evaluation metrics, namely AP$_M$ and AR$_M$ for medium people and AP$_L$ and AR$_L$ for large people, are also reported. The method is implemented based on the Detectron2 framework (Yuxin Wu, Alexander Kirillov, Francisco Massa, Wan-Yen Lo, and Ross Girshick. Detectron2. https://github. com/facebookresearch/detectron2, 2019.). No data augmentation is used during training or testing. Inference times are measured on a single V100 GPU with one image per batch.

The pose estimation method is evaluated on DensePose-COCO dataset, which has manually annotated correspondences on a subset of the COCO dataset (Tsung-Yi Lin, Michael Maire, Serge Belongie, James Hays, Pietro Perona, Deva Ramanan, Piotr Dollár, and C Lawrence Zitnick. Microsoft coco: Common objects in context. In ECCV, 2014). There are about 50K labeled human instances each of which is annotated with 100 points on average. In total, there are about 5 million manually annotated correspondences. The dataset is split into a training set and a validation set with 32K images and 1.5k images, respectively.

The proposed end-to-end pose estimation method 10 is evaluated on DensePose-COCO minival split and compared with the state-of-the-art top-down methods. The pose estimation method 10 achieves 64.0% AP and 70.9% AR with ResNet-50. The performance of the pose estimation method 10 is better than the strong baselines DP-cascade (in the above-cited DensePose paper) (64.0% vs. 55.8% AP) and Parsing (Lu Yang, Qing Song, ZhihuiWang, and Ming Jiang. Parsing R-CNN for instance-level human analysis. In CVPR, 2019.) (64.0% vs. 61.6% AP), and is comparable to AMA-Net (Yuyu Guo, Lianli Gao, Jingkuan Song, Peng Wang, Wuyuan Xie, and Heng Tao Shen. Adaptive multi-path aggregation for human densepose estimation in the wild. In ACM MM, 2019.) (64.0% vs. 64.1% AP). The pose estimation method 10 is still behind the top-performing top-down methods such as DP R-CNN DeepLab (Natalia Neverova, David Novotny, Vasil Khalidov, Marc Szafraniec, Patrick Labatut, and Andrea Vedaldi. Continuous surface embeddings. In NeurIPS, 2020.). Nevertheless, it is worth noting that the top-down strategy suffers from the early commitment issue and overlap ambiguities as discussed above. Besides, top-down methods runs slower in larger multi-person scenes and usually compress image resolution heavily.

An ablation study is performed for each component of the pose estimation method 10 presented in Table 1 below, where "Ours (ResNet-50)" denotes the pose estimation method 10 with the implementation details set out hereinbefore, including the ResNet-50 backbone. The ablative settings are as follows. **w/o $L_{smooth}$**: Removing the smoothing loss $L_S$. **w/o IAN:** Removing the instance-aware normalization 48. **w/o Sparse:** Use of full dense feature maps instead of sparse feature maps, i.e. $M_{fg}$ is a tensor with all elements set to one. It can be observed that the proposed IAN technique improves the results, and the sparse technique aids to significantly reduce the computation time. Regarding the smoothing loss $L_S$, the quantitative results are almost the same, while the qualitative results are spatially smoothed: isocontour visualizations show that the isocontour becomes less noisy when applying the smoothing loss $L_S$. Such smoothness is desirable because of the continuity nature of human body surface. Furthermore, when comparing the inference time on images of different instance numbers with the stateof-the-art top-down method DP R-CNN DeepLab, it can be observed that the inference time of the pose estimation method 10 increases more slowly with the number of people in the scene, because in this approach, inference time mainly depends on the image's sparsity.

Table 1: Ablation study and average inference time one DensePose-COCO minival split.

| Method | AP | $AP_{50}$ | $AP_{75}$ | $AP_M$ | $AP_L$ | AR | $AR_{50}$ | $AR_{75}$ | $AR_M$ | $AR_L$ | time (s) |
|---|---|---|---|---|---|---|---|---|---|---|---|
| DP R-CNN Dee-pLab (Re-sNet-50) | 66.8 | 92.8 | 79.7 | 60.7 | 68.0 | 72.1 | 95.8 | 82.9 | 62.2 | 72.4 | 0.242 |
| Ours (ResNet-50) w/o $L_S$, w/o IAN, w/o Sparse | 62.2 | 91.5 | 73.4 | 55.9 | 64.0 | 69.3 | 95.9 | 80.3 | 58.2 | 70.1 | 0.380 |
| Ours (ResNet-50) w/o $L_S$, w/o IAN | 62.2 | 92.3 | 73.2 | 55.0 | 63.9 | 69.3 | 96.2 | 80.4 | 58.9 | 70.0 | 0.234 |
| Ours (ResNet-50) w/o $L_S$ | 63.8 | 91.8 | 75.9 | 57.1 | 65.8 | 71.2 | 96.2 | 83.4 | 59.0 | 71.9 | 0.211 |
| Ours (ResNet-50) | 64.0 | 92.4 | 76.0 | 57.2 | 65.7 | 70.9 | 96.4 | 82.4 | 59.9 | 71.6 | 0.209 |

To demonstrate the effectiveness of the 2D temporalsmoothing scheme, a user study has been performed on 11 YouTube video sequences of 20 seconds each. Thirty users were asked to assess the temporal smoothing of the results of the pose estimation method 10 versus the top-performing top-down method - DP R-CNN DeepLab (ResNet-50). For each video sequence, given two randomly ordered video results of dense pose isocontour visualization from these two methods, users were asked to pick one that looks temporally smoother than the other. DP R-CNN DeepLab (ResNet-50) had human preference in 7,6% of the cases, whereas the pose estimation method 10, with temporal smoothing, was preferred in 92,4% of the cases.

The pose estimation method 10 is also applied to the human pose transfer task, to translate the dense pose IUV representation input to an RGB image. The popular pix2pixHD (Ting-Chun Wang, Ming-Yu Liu, Jun-Yan Zhu, Andrew Tao, Jan Kautz, and Bryan Catanzaro. High-resolution image synthesis and semantic manipulation with conditional gans. In Proceedings of the IEEE conference on computer vision and pattern recognition, pages 8798-8807, 2018.) is adopted as the translation model and the image is generated frame-by-frame. This confirms that the temporally smooth dense pose can help alleviate video flickering issue and generate stable video results.

Further qualitative results confirm that the proposed pose estimation method 10 can predict smooth and accurate 3D body correspondences in diverse real-world scenarios exhibiting different challenges, e.g. illumination variations (indoor and outdoor), occlusions (self-occlusion, inter occlusion, and background occlusion), diverse body poses and views.

Thus, the proposed method achieves comparable results to strong top-down benchmark methods, and the results are more robust because the method avoids early commitment and overlap ambiguity, and runs in weak instance number dependent time. In addition, the proposed method is able to benefit from future improvements in each of the basic block, such as the instance segmentation techniques, in order to yield better results.

Although the present disclosure refers to specific exemplary embodiments, modifications may be provided to these examples without departing from the general scope of the invention as defined by the claims. In particular, individual

**EP 4 134 911 B1**

characteristics of the different illustrated/mentioned embodiments may be combined in additional embodiments. Therefore, the description and the drawings should be considered in an illustrative rather than in a restrictive sense.

**Claims**

1. A computer-implemented method (10) for estimating a pose of a body in at least one image (12), comprising a mask prediction (20) of predicting a mask for every detected instance of the body in the at least one image (12), and a representation prediction (30) of predicting a representation comprising a map between pixels of body regions in the whole at least one image and points of a body model, wherein the mask prediction (20) further outputs mask information which is given as an input to the representation prediction (30) and the method further comprises, for every detected instance, applying the mask to the representation to derive the pose of the body.

2. The method of claim 1, wherein the mask comprises a dense pose mask ($M_{dp}$) configured to mask pixels of the at least one image (12) which do not belong to the body of the instance.

3. The method of claim 1 or 2, further comprising extracting features (14) from the at least one image (12), wherein the mask prediction (20) and the representation prediction (30) take the extracted features as an input.

4. The method of claim 3, wherein the extracted features are extracted as a pyramid at a plurality of scales and aggregated (16).

5. The method of claim 3 or 4, wherein the representation prediction (30) comprises transforming dense features into a sparse format (34), processing the sparse format features (36) and transforming the processed features back to a dense format (38).

6. The method of any one of claims 1 to 5, wherein the map comprises an allocation of the pixels to respective body regions (I) and coordinates of the pixels in the respective body regions (U, V).

7. The method of any one of claims 1 to 6, wherein the pose of the body is derived as a shape and location of the body model in the at least one image.

8. The method of any one of claims 1 to 7, wherein the at least one image (12) is a two-dimensional image and the body model is a three-dimensional model.

9. The method of any one of claims 1 to 8, wherein the mask information comprises an instance mask ($M_{ins}$) configured to mask pixels of the at least one image (12) outside of an outline of the instance, including accessories of the body.

10. The method of any one of claims 1 to 9, wherein the mask and the mask information are predicted jointly for every detected instance.

11. The method of any one of claims 1 to 10, wherein the representation prediction (30) comprises background suppression (32) based on the mask information.

12. The method of any one of claims 1 to 11, further comprising instance-aware normalization (48) based on the mask information.

13. The method of any one of claims 1 to 12, wherein the at least one image (12) comprises a plurality of images forming a video, and the method further comprises temporally smoothing (62) the estimated poses between subsequent ones of the images.

14. A computer program including instructions for executing the steps of the method of any one of claims 1 to 13 when said program is executed by a computer.

15. A recording medium readable by a computer and having recorded thereon a computer program including instructions for executing the steps of the method of any one of claims 1 to 13.

**Patentansprüche**

1. Rechnerimplementiertes Verfahren (10) zum Schätzen einer Haltung eines Körpers in mindestens einem Bild (12), umfassend eine Maskenvorhersage (20) zum Vorhersagen einer Maske für jede erkannte Instanz des Körpers in dem mindestens einen Bild (12), und eine Darstellungsvorhersage (30) zum Vorhersagen einer Darstellung, umfassend eine Karte zwischen Pixeln von Körperregionen in dem gesamten mindestens einen Bild und Punkten eines Körpermodells, wobei die Maskenvorhersage (20) ferner Maskeninformationen ausgibt, die als Eingang in die Darstellungsvorhersage (30) gegeben werden, und das Verfahren ferner für jeden erfassten Fall ein Anwenden der Maske auf die Darstellung, um die Haltung des Körpers abzuleiten.

2. Verfahren nach Anspruch 1, wobei die Maske eine dichte Haltungsmaske ($M_{dp}$) umfasst, die konfiguriert ist, um Pixel des mindestens einen Bilds (12) zu maskieren, die nicht zu dem Körper der Instanz gehören.

3. Verfahren nach Anspruch 1 oder 2, ferner umfassend ein Extrahieren von Merkmalen (14) aus dem mindestens einen Bild (12), wobei die Maskenvorhersage (20) und die Darstellungsvorhersage (30) die extrahierten Merkmale als Eingang verwenden.

4. Verfahren nach Anspruch 3, wobei die extrahierten Merkmale als Pyramide in einer Vielzahl von Maßstäben extrahiert und aggregiert werden (16).

5. Verfahren nach Anspruch 3 oder 4, wobei die Darstellungsvorhersage (30) ein Transformieren dichter Merkmale in ein spärliches Format (34), Verarbeiten der Merkmale in dem spärlichen Format (36) und Transformieren der verarbeiteten Merkmale zurück in ein dichtes Format (38) umfasst.

6. Verfahren nach einem der Ansprüche 1 bis 5, wobei die Karte eine Zuordnung der Pixel zu jeweiligen Körperregionen (I) und Koordinaten der Pixel in den jeweiligen Körperregionen (U, V) umfasst.

7. Verfahren nach einem der Ansprüche 1 bis 6, wobei die Haltung des Körpers als eine Form und Position des Körpermodells in dem mindestens einen Bild abgeleitet wird.

8. Verfahren nach einem der Ansprüche 1 bis 7, wobei das mindestens eine Bild (12) ein zweidimensionales Bild ist und das Körpermodell ein dreidimensionales Modell ist.

9. Verfahren nach einem der Ansprüche 1 bis 8, wobei die Maskeninformationen eine Instanzmaske ($M_{ins}$) umfasst, die konfiguriert ist, um Pixel des mindestens einen Bilds (12) außerhalb eines Umrisses der Instanz, einschließlich Zubehör des Körpers, zu maskieren.

10. Verfahren nach einem der Ansprüche 1 bis 9, wobei die Maske und die Maskeninformation gemeinsam für jede erkannte Instanz vorhergesagt werden.

11. Verfahren nach einem der Ansprüche 1 bis 10, wobei die Darstellungsvorhersage (30) Hintergrundunterdrückung (32) basierend auf den Maskeninformationen umfasst.

12. Verfahren nach einem der Ansprüche 1 bis 11, ferner umfassend eine instanzabhängige Normalisierung (48) basierend auf den Maskeninformationen.

13. Verfahren nach einem der Ansprüche 1 bis 12, wobei das mindestens eine Bild (12) eine Vielzahl von Bildern umfasst, die ein Video bilden, und das Verfahren ferner ein zeitliches Glätten (62) der geschätzten Haltungen zwischen aufeinander folgenden Bildern umfasst.

14. Rechnerprogramm, das Anweisungen zum Ausführen der Schritte des Verfahrens nach einem der Ansprüche 1 bis 13 beinhaltet, wenn das Programm von einem Rechner ausgeführt wird.

15. Aufzeichnungsmedium, das von einem Rechner lesbar ist und auf dem ein Rechnerprogramm aufgezeichnet ist, das Anweisungen zum Ausführen der Schritte des Verfahrens nach einem der Ansprüche 1 bis 13 beinhaltet.

**EP 4 134 911 B1**

**Revendications**

1. Procédé mis en œuvre par ordinateur (10) pour estimer une pose d'un corps dans au moins une image (12), comprenant une prédiction de masque (20) destinée à prédire un masque pour chaque occurrence détectée du corps dans la au moins une image (12), et une prédiction de représentation (30) destinée à prédire une représentation comprenant une mise en relation entre des pixels de zones de corps dans la totalité de la au moins une image et des points d'un modèle de corps, la prédiction de masque (20) délivrant en outre de l'information de masque qui est donnée comme une entrée à la prédiction de représentation (30) et le procédé comprenant en outre, pour chaque occurrence détectée, l'application du masque sur la représentation pour en déduire la pose du corps.

2. Procédé selon la revendication 1, selon lequel le masque comprend un masque de pose dense ($M_{dp}$) configuré pour masquer les pixels de la au moins une image (12) qui n'appartiennent pas au corps de l'occurrence.

3. Procédé selon la revendication 1 ou 2, comprenant en outre l'extraction de caractéristiques (14) de la au moins une image (12), la prédiction de masque (20) et la prédiction de représentation (30) prenant les caractéristiques extraites comme entrée.

4. Procédé selon la revendication 3, selon lequel les caractéristiques extraites sont extraites comme pyramide à une pluralité d'échelles et agrégées (16).

5. Procédé selon la revendication 3 ou 4, selon lequel la prédiction de représentation (30) comprend la transformation de caractéristiques denses dans un format peu dense (34), le traitement des caractéristiques de format peu dense (36) et la transformation des caractéristiques traitées de nouveau en un format dense (38).

6. Procédé selon l'une quelconque des revendications 1 à 5, selon lequel la mise en relation comprend une attribution des pixels à des zones de corps respectives (I) et de coordonnées des pixels dans les zones de corps respectives (U, V).

7. Procédé selon l'une quelconque des revendications 1 à 6, selon lequel la pose du corps est déduite comme une forme et un emplacement du modèle de corps dans la au moins une image.

8. Procédé selon l'une quelconque des revendications 1 à 7, selon lequel la au moins une image (12) est une image bidimensionnelle et le modèle de corps est un modèle tridimensionnel.

9. Procédé selon l'une quelconque des revendications 1 à 8, selon lequel l'information de masque comprend un masque d'occurrence ($M_{ins}$) configuré pour masquer des pixels de la au moins une image (12) en dehors d'un contour de l'occurrence, comprenant des accessoires du corps.

10. Procédé selon l'une quelconque des revendications 1 à 9, selon lequel le masque et l'information de masque sont prédits conjointement pour chaque occurrence détectée.

11. Procédé selon l'une quelconque des revendications 1 à 10, selon lequel la prédiction de représentation (30) comprend une suppression d'arrière-plan (32) sur la base de l'information de masque.

12. Procédé selon l'une quelconque des revendications 1 à 11, comprenant en outre une normalisation tenant compte de l'occurrence (48) sur la base de l'information de masque.

13. Procédé selon l'une quelconque des revendications 1 à 12, selon lequel la au moins une image (12) comprend une pluralité d'images formant une vidéo, et le procédé comprend en outre le lissage temporel (62) des poses estimées entre des images qui se suivent.

14. Programme informatique comprenant des instructions pour exécuter les étapes du procédé selon l'une quelconque des revendications 1 à 13 quand ledit programme est exécuté par un ordinateur.

15. Support d'enregistrement lisible par un ordinateur et ayant enregistré dessus un programme informatique comprenant des instructions pour exécuter les étapes du procédé selon l'une quelconque des revendications 1 à 13.

**FIG.1**

EP 4 134 911 B1

**FIG.2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 110008915 A

- US 11074711 B1

### Non-patent literature cited in the description

- Mask R-CNN. **HE, G. GKIOXARI** ; **P. DOLLAR** ; **R. GIRSHICK**. In Computer Vision (ICCV), 2017 IEEE International Conference on Computer Vision. IEEE, 2017, 2980-2988
- **LIU, L. QI** ; **H. QIN** ; **J. SHI** ; **J. JIA**. Path aggregation network for instance segmentation. *In Proceedings of the IEEE Conference on Computer Vision and Pattern Recognition*, 2018, 8759-8768
- **MATTHEW LOPER** ; **NAUREEN MAHMOOD** ; **JAVIER ROMERO** ; **GERARD PONS-MOLL** ; **MICHAEL J. BLACK**. 2015. SMPL: a skinned multi-person linear model. *ACM Trans. Graph.*, November 2015, vol. 34 (6)
- **TSUNG-YI LIN** ; **PIOTR DOLLÁR** ; **ROSS GIRSHICK** ; **KAIMING HE** ; **BHARATH HARIHARAN** ; **SERGE BELONGIE**. Feature pyramid networks for object detection. *CVPR*, 2017
- **XINLONG WANG** ; **TAO KONG** ; **CHUNHUA SHEN** ; **YUNING JIANG** ; **LEI LI**. Solo: Segmenting objects by locations. *ECCV*, 2020
- **XINLONG WANG** ; **RUFENG ZHANG** ; **TAO KONG** ; **LEI LI** ; **CHUNHUA SHEN**. Solov2: Dynamic and fast instance segmentation. *NeurIPS*, 2020
- **BENJAMIN GRAHAM** ; **MARTIN ENGELCKE** ; **LAURENS VAN DER MAATEN**. 3D semantic segmentation with submanifold sparse convolutional networks. *CVPR*, 2018
- **DMITRY ULYANOV** ; **ANDREA VEDALDI** ; **VICTOR LEMPITSKY**. Instance normalization: The missing ingredient for fast stylization. *arXiv preprint arXiv:1607.08022*, 2016

- **ZACHARY TEED** ; **JIA DENG**. RAFT: Recurrent all-pairs field transforms for optical flow. *ECCV*, 2020
- **ZHI TIAN** ; **CHUNHUA SHEN** ; **HAO CHEN** ; **TONG HE**. FCOS: Fully convolutional one-stage object detection. *ICCV*, 2019
- **YUXIN WU** ; **ALEXANDER KIRILLOV** ; **FRANCISCO MASSA** ; **WAN-YEN LO** ; **ROSS GIRSHICK**. *Detectron2*, 2019, https://github.com/facebookresearch/detectron2
- **TSUNG-YI LIN** ; **MICHAEL MAIRE** ; **SERGE BELONGIE** ; **JAMES HAYS** ; **PIETRO PERONA** ; **DEVA RAMANAN** ; **PIOTR DOLLÁR** ; **C LAWRENCE ZITNICK**. Microsoft coco: Common objects in context. *ECCV*, 2014
- **LU YANG** ; **QING SONG** ; **ZHIHUIWANG** ; **MING JIANG**. Parsing R-CNN for instance-level human analysis. *CVPR*, 2019
- **YUYU GUO** ; **LIANLI GAO** ; **JINGKUAN SONG** ; **PENG WANG** ; **WUYUAN XIE** ; **HENG TAO SHEN**. Adaptive multi-path aggregation for human densepose estimation in the wild. *ACM MM*, 2019
- **NATALIA NEVEROVA** ; **DAVID NOVOTNY** ; **VASIL KHALIDOV** ; **MARC SZAFRANIEC** ; **PATRICK LABATUT** ; **ANDREA VEDALDI**. Continuous surface embeddings. *NeurIPS*, 2020
- **TING-CHUN WANG** ; **MING-YU LIU** ; **JUN-YAN ZHU** ; **ANDREW TAO** ; **JAN KAUTZ** ; **BRYAN CATANZARO**. High-resolution image synthesis and semantic manipulation with conditional gans. *Proceedings of the IEEE conference on computer vision and pattern recognition*, 2018, 8798-8807